# FASCICULE DE BREVET EUROPEEN

(11) **EP 0 496 656 B1**
(45) Date de publication et mention de la délivrance du brevet: **13.09.1995**
(21) Numéro de dépôt: 92400138.1
(22) Date de dépôt: 20.01.1992
(51) Int. Cl.: G07F 7/10

(54) **Procédé d'échange de droits entre cartes à microprocesseur**
Rechteaustausch-Verfahren zwischen Mikroprozessorkarten
Method for exchanging rights between microprocessor-cards

(30) Priorité: 22.01.1991 FR 9100680
(43) Date de publication de la demande: 29.07.1992
(73) Titulaire: FRANCE TELECOM, 92131 Issy les Moulineaux (FR); LA POSTE, ETABLISSEMENT AUTONOME DE DROIT PUBLIC, F-75700 Paris (FR)
(72) Inventeur: Pailles, Jean-Claude, F-14610 Epron (FR); Remery, Patrick, F-14000 Caen (FR); Vallee, Françoise, F-14480 Lantheuil (FR)
(74) Mandataire: Signore, Robert

(56) Documents cités:
- EP-A- 0 100 260
- EP-A- 0 172 670
- EP-A- 0 256 768
- WO-A-81/02070
- WO-A-85/04035
- ECHO DES RECHERCHES no. 134, Octobre 1988, PARIS pages 15 - 24; P.REMERY & J.C. PAILLES ET.AL.: 'LE PAIEMENT ELECTRONIQUE'

## Description

La présente invention a pour objet un procédé d'échange de droits entre cartes à microprocesseur.

Les droits dont il est question dans l'invention peuvent être de nature quelconque et donner accès à des services divers. Ils sont le plus souvent liés à des transactions financières (crédit, débit). L'invention trouve donc une application privilégiée dans ce qu'il est convenu d'appeler le "paiement électronique". Dans le cas de telles transactions, les cartes constituent des "porte-monnaie" électroniques.

L'utilisation de tels porte-monnaie n'est possible que si certaines conditions sont remplies : la sécurité de l'échange doit être totale, les cartes doivent être infalsifiables, quelles que soient les manipulations qu'elles subissent et enfin de faux porte-monnaie doivent être impossibles à fabriquer.

Le recours à la technologie des cartes à mémoire est justifié dans la mesure où cette technologie emploie des composants spécialement conçus pour offrir un très haut niveau de sécurité. Ces composants sont constitués d'une puce "mono-chip" comprenant un microprocesseur avec ses programmes, ses mémoires et ses moyens d'entrée-sortie. Mémoires et moyens d'entrée-sortie sont sous le contrôle du microprocesseur et de son programme, lequel ne peut être modifié extérieurement.

Le premier niveau de sécurité à assurer porte sur l'échange de droits entre cartes afin qu'il soit impossible de simuler un rechargement de sa propre carte, ce qui reviendrait à créer de la fausse monnaie.

La sécurité de l'échange s'appuye sur des techniques classiques en sécurité informatique. Il s'agit de garantir l'intégrité et l'authenticité du message envoyé par la carte débitrice à la carte créditrice.

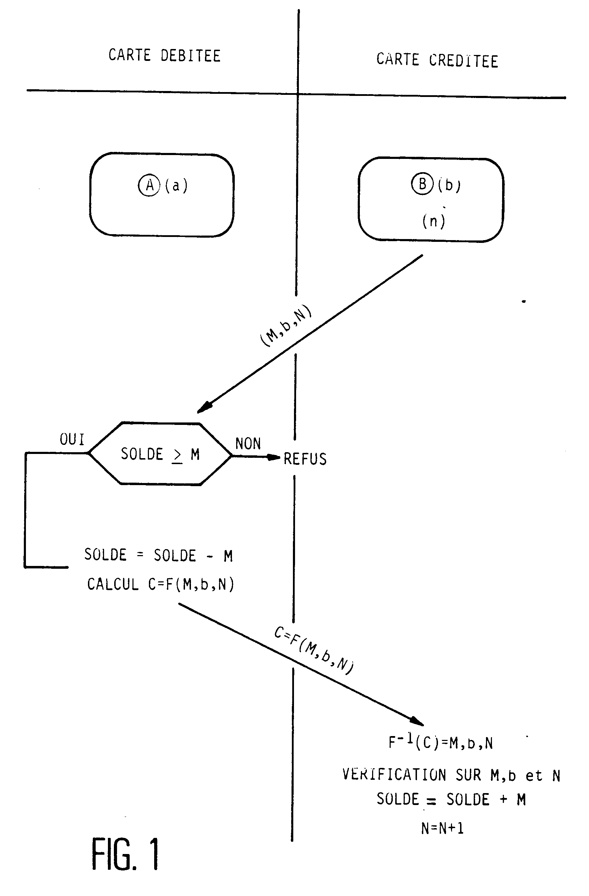

La figure 1 illustre un exemple de procédure connue pour assurer un échange en toute sécurité. Une telle procédure est décrite par exemple dans l'article de P. REMERY, J.C. PAILLES, F. LAY intitulé "Le paiement électronique" publié dans la revue "L'écho des Recherches", n° 134, 4ème trimestre 1988, pages 15-24.

Dans la transaction illustrée sur la figure 1, on a les opérations suivantes :
- la carte A à débiter est définie par une identité (a) et elle présente un solde créditeur ; la carte B à créditer est définie par une identité (b) et par un nombre N qui est, par exemple, le nombre de transactions qu'elle a déjà effectuées ;
- la carte B commence par s'identifier auprès de la carte à débiter A en lui adressant son identité (b) et le nombre N ; elle indique également le montant M qu'elle désire recevoir ;
- la carte A vérifie si son solde est au moins égal au montant demandé M ;
- dans la négative, l'ordre de débit serait refusé ; dans l'affirmative, la carte A diminue son solde de la quantité M et calcule un certificat C (ou preuve), qui est une fonction F du montant M, de l'identité (b) de la carte à créditer B et du nombre N, soit F(M,b,N) ;
- la carte A envoie ce certificat F(M,b,N) à la carte B ;
- cette dernière reçoit le certificat F(M,b,N) et, par La fonction inverse de la fonction F, calcule un montant M, une identité (b) et un nombre N ;
- la carte B vérifie si le montant ainsi calculé est bien le montant demandé (M), si l'identité calculée est bien la sienne (b) et si le nombre calculé est bien le nombre qu'elle avait choisi (N) ;
- dans l'affirmative, la carte B incrémente d'une unité le nombre N en vue de la prochaine transaction et augmente son solde du montant M en question.

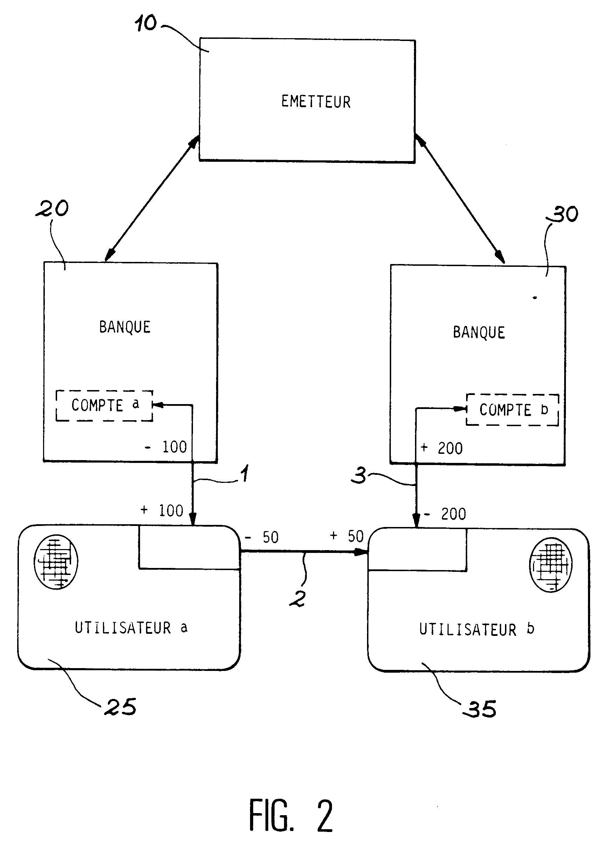

La figure 2 illustre comment la monnaie électronique peut circuler dans un système équipé de cartes aptes à mettre en oeuvre le procédé qui vient d'être décrit. Un émetteur de monnaie 10 a autorisé des banques 20 et 30, chacune contenant des comptes d'utilisation (a) et (b). Les utilisateurs possédent des cartes 25, 35 capables d'échanger des droits avec les banques.

Sur le Schéma illustré, La banque 20 est supposée avoir chargé la carte 25 d'un montant de 100F (opération 1) ; la carte 25 a été débitée de 50F (opération 2) au profit de la carte 35. Cette dernière a été débitée de 200F au profit de sa banque 30 (opération 3).

Si cette procédure donne déjà satisfaction à certains égards, il reste à résoudre le problème du choix de la fonction F servant à calculer le certificat C.

Il est clair que cette fonction ne doit pouvoir être calculée que par des cartes porte-monnaie, et non par un ordinateur de type PC par exemple, sinon la simulation d'un rechargement de sa propre carte serait facile. Une première solution consiste à prendre une fonction F qui est secrète. Une seconde solution consiste à définir F par une (ou plusieurs) clé(s) secrète(s), de façon qu'il soit impossible d'effectuer une transaction sans la connaissance de cette (ou de ces) clé(s).

C'est vers cette seconde solution que s'oriente l'invention, la première étant peu fiable, pour la raison que le secret F ne peut être garanti, en raison notamment de la nécessité d'écrire et de tester le programme permettant de calculer F lors du développement d'une telle carte.

Avec la seconde solution, la sécurité du système va dépendre de l'aptitude de la fonction F à résister aux tentatives de fraudes.

De façon plus précise, la question est de savoir si, connaissant les paramètres M (montant), b (identité de la carte à créditer), N (nombre de transactions déjà effectuées) et le certificat C=F_{K}(M,b,N), où la fonction F dépend d'une clé K, on peut remonter à la clé K utilisée par la carte d'identité a.

Dans l'affirmative, le secret serait percé et il serait possible de simuler des rechargements de toute carte (b), puisque le calcul F_{K}(M,b,N) serait possible quelque soit (b). Concrètement, il serait possible de réaliser un logiciel sur ordinateur PC et un lecteur de carte permettant de recharger toute carte.

Ce logiciel et l'ordinateur le mettant en oeuvre constituerait donc un "clone" de carte utilisable pour recharger toute carte en simulant le débit d'une fausse carte (a′) et le crédit d'une vraie carte (b). La fausse monnaie ainsi créée serait en quelque sorte "blanchie" après cette opération et rien ne permettrait plus de distinguer, dans la carte b, ce qui provient de tel ou tel rechargement.

Un fraudeur voulant découvrir une clé K a deux possibilités :
a) soit l'investigation physique de la mémoire de la carte au moyen d'instruments tels que le microscope électronique,
b) soit la crypto-analyse des certificats (ou preuves) produits par la carte débitée, en espérant, à l'aide des plus gros ordinateurs connus, résoudre l'équation C=F_{K}(M,b,N) où C, P, b, N sont connus et K inconnu.

Pour éviter le premier type de fraude, il n'y a pas d'autres solutions que de cacher les parties sensibles du composant (mémoire, bus) par des écrans métalliques. Par ailleurs, il ne faut pas que l'investigation d'une carte donne tous les secrets du système, donc permette de simuler toute carte débitrice, car alors il n'y aurait plus de moyens de détecter les fraudes.

Pour éviter le second type de fraude, on peut penser à deux parades :
- choisir une fonction F "dure" à décrypter, la difficulté est qu'il est malaisé d'apprécier la dureté d'une fonction cryptographique,
- changer régulièrement (tous les mois par exemple) la clé des cartes, notamment au moment où elles sont rechargées ; dans ce cas, la vie d'un clone est limitée, (à un mois dans l'exemple pris).

La présente invention propose un autre procédé, plus efficace, fondé sur un système à clés mutiples diversifiées. Selon l'invention, la clé utilisée pour constituer le certificat est obtenue à partir d'une des clés d'un ensemble, cette clé étant diversifiée en fonction de l'identité de la carte à créditer. Ainsi, la clé utilisée change avec l'identité de la carte à créditer. Constituer un appareil susceptible de simuler une opération de débit en liaison avec une carte à créditer nécessiterait la connaissance de toutes les clés de l'ensemble. La difficulté de la fraude est donc considérablement augmentée par rapport aux méthodes à clé unique.

De façon précise, la présente invention a pour objet un procédé d'échange de droits entre cartes à microprocesseur du genre de ceux qui viennent d'être définis et qui est caractérisé par le fait que la fonction F servant à calculer le certificat C est définie et utilisée par les opérations suivantes :
- on définit préalablement des clés multiples de cryptage (K1, K2, ..., Km, ..., Kn, ...),
- la carte à créditer (B) contient l'une de ces clés multiples, soit (Kn), où le numéro de clé n est une fonction (u) de l'identité (b) de la carte (B), (u(b)=n),
- la carte à débiter (A) contient certaines clés diversifiées Ka1, Ka2, ..., Kan, ... qui sont chacune une fonction des clés multiples K1, K2, ... et de l'identité (a) de la carte à débiter (A), ces clés diversifiées étant chargées dans la carte (A) lors de sa personnalisation,
- la carte à débiter (A) recevant l'identité (b) de la carte à créditer (B) calcule le rang n de la clé diversifiée à utiliser par la fonction u(b) et en déduit celle des clés diversifiées Kan, avec laquelle elle doit calculer le certificat (C),
- la carte à créditer (B) calcule la clé diversifiée Kan qui a servi au calcul du certificat qu'elle a reçu et cela à l'aide de sa propre clé (Kn) et de l'identité (a) correspondant à la carte à débiter (A), la carte à créditer (B) pouvant alors décrypter le certificat (C) à l'aide de cette clé diversifiée Kan.

De préférence, le système est symétrique, en ce sens que chaque carte peut être soit débitée, soit créditée. Dans ce cas, la carte (A) contient en outre l'une des clés multiples, soit Km, où le numéro de clé m est une fonction (u) de l'identité de la carte (u(a)=m) et, symétriquement, la carte (B) contient des clés diversifiées Kb1, Kb2, ..., Kbm lui permettant de calculer un certificat destiné notamment à une carte A d'identité m à l'aide de la clé diversifiée Kbm, la carte A recevant un tel certificat reconstituant cette clé à l'aide de sa clé Km et de b.

De toute façon, les caractéristiques et avantages de l'invention seront mieux comprises à la lumière de la description qui va suivre. Cette description porte sur un exemple de réalisation donné à titre explicatif et nullement limitatif et elle se réfère à des dessins annexés sur lesquels :
- la figure 1, déjà décrite, illustre un procédé selon l'art antérieur,
- la figure 2, déjà décrite, illustre la circulation de monnaie électronique,
- la figure 3 illustre le contenu des cartes dans un procédé selon l'invention dans une variante symétrique,
- la figure 4 illustre deux transactions symétriques, l'une de débit de A vers B, l'autre de débit de B vers A.

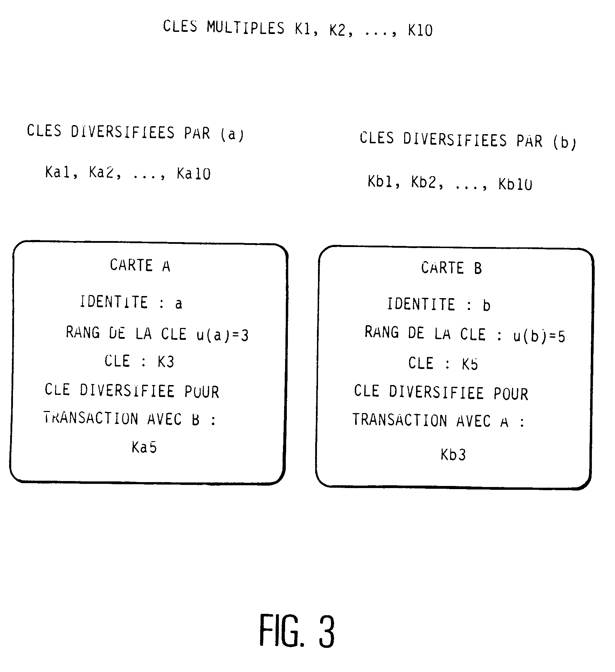

Sur la figure 3, est représentée une situation symétrique où chaque carte (A ou B) peut effectuer une transaction avec l'autre (B ou A).

On suppose qu'on a choisi dix clés K1, K2, ..., K10, ce nombre 10 étant naturellement arbitraire et ne limitant en rien l'invention. La carte A est repérée par une identité (a). Il est possible de constituer une fonction de cette identité (a) et de chacune des clés K1, K2, ..., K10 pour obtenir dix clés diversifiées Ka1, Ka2, ..., Ka10.

De la même manière, la carte B étant repérée par une identité (b), on constitue dix clés diversifiées Kb1, Kb2, ..., Kb10.

Par ailleurs, à l'identité (a) correspond, par une fonction u donnée, un rang dans l'ordre des clés. Dans l'exemple illustré u(a) est supposé égal à 3. Cela signifie que la carte A se voit affecter la clé K3.

De la même maniére, l'identité (b) définit un rang u(b) qui,dans l'exemple illustré, est supposé égal à 5. Cela signifie que la carte B se voit affecter la clé K5.

Pour travailler avec la carte B, dont le rang de la clé est 5, la carte A est pourvue de la cinquième clé diversifiée propre à A soit Ka5.

Pour travailler avec la carte A, dont le rang de la clé est 3, la carte B est pourvue de la troisième clé diversifiée propre à B, soit Kb3.

De maniére plus générale, pour des transactions à effectuer avec d'autres cartes que B, il faudrait écrire dans la carte A d'autres clés diversifiées Ka1, Ka2, ... soit dix clés au maximum.

De même, dans la carte B, où, pour travailler avec d'autres cartes que A, il faudrait prévoir d'autres clés diversifiées Kb1, Kb2, ... soit dix clés au maximum.

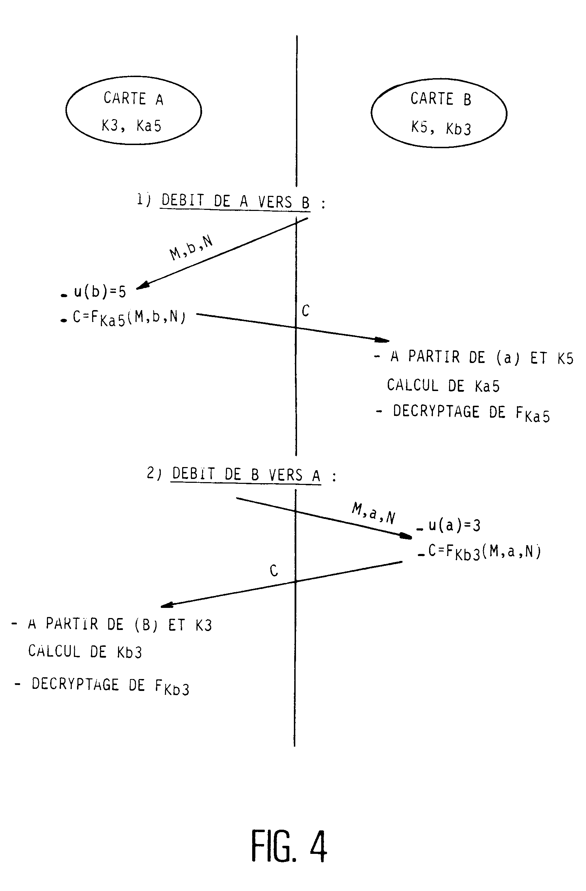

Munies de ces diverses clés, les cartes A et B peuvent effectuer des transactions dans les deux sens comme illustré sur la figure 4. Sur cette figure, les opérations connues de vérification du solde, de diminution de celui-ci dans la carte débitée, d'augmentation du solde dans la carte créditée, de vérification des paramètres et d'incrémentation du nombre N ne sont pas représentées parce qu'elles sont effectuées comme dans l'art antérieur (cf figure 1). Les deux opérations symétriques propres à l'invention sont alors :
1) DEBIT DE A AU PROFIT DE B
   - La carte B transmet à la carte A sa demande avec le montant M, l'identité (b), le nombre N ;
   - la carte A utilise la clé diversifiée Ka5 pour calculer le certificat C ;
   - la carte A transmet le certificat C à la carte B ;
   - à partir de l'identité (a) de A et de la clé K5 qu'elle possède, la carte B calcule Ka5 ce qui lui permet de décrypter le certificat C.
2) DEBIT DE B AU PROFIT DE A
   - la carte A transmet à la carte B sa demande avec le montant M, l'identité (a) et le nombre N ;
   - la carte B utilise la clé diversifiée Kb3 pour calculer le certificat C ;
   - la carte B transmet le certificat C à la carte A ;
   - à partir de l'identité (b) de B et de la clé K3 qu'elle possède, la carte A calcule Kb3, ce qui lui permet de décrypter le certificat C.

## Revendications

1. Procédé d'échange de droits entre cartes à microprocesseur consistant à débiter une première carte (A) d'un certain montant (M) et à créditer une seconde carte (B) de ce même montant (M), procédé dans lequel :
- les cartes (A et B) sont repérées par des identités, respectivement (a et b),
- la carte à créditer (B) s'identifie auprès de la carte à débiter (A) en lui adressant son identité (b) et un nombre (N) qu'elle a choisi et elle indique le montant (M) des droits à échanger,
- la carte à débiter (A) vérifie si son solde de droits est au moins égal au montant demandé (M),
- dans l'affirmative, la carte à débiter (A) diminue son solde du montant (M) et calcule un certificat (F(M,b,N)), qui est une fonction (F) du montant (M), de l'identité (b) de la carte à créditer (B) et du nombre (N),
- la carte à débiter (A) envoie ce certificat (F(M,b,N)) à la carte à créditer (B),
- la carte à créditer (B) reçoit ce certificat (F(M,b,N)), et en déduit le montant (M), l'identité (b) et le nombre (N),
- la carte à créditer (B) vérifie si le montant calculé (M) est bien le montant demandé (M), si l'identité calculée (b) est bien la sienne et si le nombre calculé (N) est bien le nombre (N) qu'elle avait choisi,
- dans l'affirmative, la carte à créditer (B) change le nombre (N) en vue d'un prochain échange et échange son solde du montant en question (M),
ce procédé étant caractérisé par le fait que la fonction (F) servant à calculer le certificat (C) est définie et utilisée par les opérations suivantes :
- on définit préalablement des clés multiples de cryptage (K1, K2, ..., Km, ..., Kn, ...),
- la carte à créditer (B) contient l'une de ces clés multiples (Kn), où le numéro de clé (n) est une fonction (u) de l'identité (b) de la carte (B), (u(b)=n),
- la carte à débiter (A) contient certaines clés diversifiées (Ka1, Ka2, ..., Kan, ...) qui sont chacune une fonction des clés multiples (K1, K2, ...) et de l'identité (a) de la carte à débiter (A), ces clés diversifiées étant chargées dans la carte (A) lors de sa personnalisation,
- la carte à débiter (A) recevant l'identité (b) de la carte à créditer (B) calcule le rang (n) de la clé diversifiée par la fonction u(b) et en déduit celle des clés diversifiées (Kan) avec laquelle elle doit calculer le certificat (C),
- la carte à créditer (B) calcule la clé diversifiée (Kan) qui a servi au calcul du certificat qu'elle a reçu et cela à l'aide de sa propre clé (Kn) et de l'identité (a) correspondant à la carte à débiter (A), la carte à créditer (B) pouvant alors décrypter le certificat (C) à l'aide de cette clé diversifiée (Kan).

2. Procédé selon la revendication 1, dans lequel chaque carte (A) ou (B) doit être soit débitée soit créditée :
- la carte (A) contient en outre l'une des clés multiples (Km), où le numéro de clé (m) est une fonction (u) de l'identité de la carte (u(a)=m),
- la carte (B) contient des clés diversifiées (Kb1, Kb2, ..., Kbm), lui permettant de calculer un certificat destiné notamment à une carte (A) d'identité (m) à l'aide de la clé diversifiée (Kbm), la carte (A) recevant un tel certificat reconstituant cette clé à l'aide de sa clé (Km) et de son identité (b).

## Patentansprüche

1. Verfahren zur Umbuchung von Gebühren zwischen Mikroprozessorkarten, das darin besteht, die eine Karte (A) mit einem bestimmten Betrag (M) zu belasten und denselben Betrag (M) der anderen Karte (B) gutzuschreiben, dadurch gekennzeichnet, daß
- die Karten (A und B) mit den entsprechenden Kennungen (a und b) versehen sind,
- sich die Karte (B), der der Betrag gutgeschrieben werden soll, bei der zu belastenden Karte (A) anmeldet, indem sie dieser Karte ihre Kennung (b), eine ausgewählte Zahl (N) und den Betrag (M) der umzubuchenden Gebühren übermittelt,
- die zu belastende Karte (A) überprüft, ob ihr Gebührensaldo mindestens so groß ist, wie der angeforderte Betrag (M),
- wenn dies der Fall ist, wird der Saldo der zu belastenden Karte (A) um den Betrag (M) vermindert und ein Protokoll (F(M,b,N)) errechnet, welches eine Funktion (F) des Betrages (M), der Kennung (b) der Karte (B), die die Gutschrift erhalten soll, und der Zahl (N) ist,
- die zu belastende Karte (A) das Protokoll (F(M,b,N)) an die Karte (B), die die Gutschrift erhalten soll, sendet,
- die Karte (B), die die Gutschrift erhalten soll, dieses Protokoll empfängt und daraus den Betrag (M), die Kennung (b) und die Zahl (N) ableitet,
- die Karte (B), die die Gutschrift erhalten soll, überprüft, ob der berechnete Betrag (M) dem geforderten Betrag (M) entspricht, ob die berechnete Kennung (b) ihre Kennung ist und ob die berechnete Zahl (N) der von ihr gewählten Zahl (N) entspricht,
- wenn dies der Fall ist, ändert die Karte (B), die die Gutschrift erhalten soll, die Zahl (N) im Hinblick auf die nächste Umbuchung und den Saldo des entsprechenden Betrages (M), wobei dieses Verfahren dadurch gekennzeichnet ist, daß die Funktion (F), die zur Berechnung des Protokolls (C) dient, von nachfolgenden Operationen definiert und verwendet wird:
- es werden zuvor die Mehrfach-Kodierungsschlüssel (K1, K2, ..., Km, ..., Kn, ...) definiert,
- die Karte (B), die die Gutschrift erhalten soll, enthält einen dieser Mehrfachschlüssel (Kn), wobei die Nummer des Schlüssels (n) eine Funktion (u) der Kennung (b) der Karte (B) ist, (u(b)=n),
- die zu belastende Karte (A) enthält bestimmte abgewandelte Schlüssel (Ka1, Ka2,..., Kan,...), von denen jeder eine Funktion der Mehrfachschlüssel (K1, K2,...) und der Kennung (a) der zu belastenden Karte (A) ist, wobei diese abgewandelten Schlüssel in die Karte (A) eingespeichert werden, wenn diese Karte einer Person zugeordnet wird,
- die zu belastende Karte (A), die die Kennung (b) der Karte (B), die die Gutschrift erhalten soll, empfängt, berechnet den Rang (n) des abgewandelten Schlüssels durch die Funktion (u(b)) und leitet daraus die Funktion der abgewandelten Schlüssel (Kan) ab, mit Hilfe derer die Karte das Protokoll (C) berechnen muß,
- die Karte (B), die die Gutschrift erhalten soll, berechnet den abgewandelten Schlüssel (Kan), der zur Berechnung des Protokolls gedient hatte, das die Karte empfangen hat, und zwar mit Hilfe seines eigenen Schlüssels (Kn) und der Kennung (a), die der zu belastenden Karte (A) entspricht, wobei die Karte (B), die die Gutschrift erhalten soll, nun in der Lage ist, das Protokoll (C) mit Hilfe dieses abgewandelten Schlüssels (Kan) zu dekodieren.

2. Verfahren nach Anspruch 1, bei dem jede Karte (A) oder (B) belastet werden bzw. eine Gutschrift erhalten kann, dadurch gekennzeichnet, daß:
- die Karte (A) des weiteren einen der Mehrfachschlüssel (Km) enthält, wobei die Nummer des Schlüssels (m) eine Funktion (u) der Kennung der Karte (u(a)=m) ist,
- die Karte (B) abgewandelte Schlüssel (Kb1, Kb2, ...., Kbm) enthält, mit deren Hilfe die Karte ein Protokoll berechnen kann, daß vor allem an eine Karte (A) mit der Kennung (m) mit Hilfe des abgewandelten Schlüssels (Kbm) gesendet wird, während die Karte (A), die ein solches Protokoll empfängt, diesen Schlüssel mit Hilfe seines Schlüssels (Km) und seiner Kennung (b) rekonstituiert.

## Claims

1. Process for exchange of rights between microprocessor cards consisting in debiting a first card (A) by a certain amount (M) and in crediting a second card (B) by this same amount (M), wherein:
cards (A and B) are identified by identities, respectively (a and b),
card (B) to be credited identifies itself to card (A) to be debited by sending its identity (b) and a number (N) that it has selected to card (B) and card (B) indicates an amount (M) of the rights to be exchanged,
card (A) to be debited verifies if its balance of rights is at least equal to requested amount (M),
in the affirmative, card (A) to be debited reduces its balance of amount (M) and calculates a voucher (F(M,b,N)), which is a function F of amount (M), of identity (b) of card (B) to be credited and of number (N),
card (A) to be debited sends this voucher (F(M,,N) to card (B) to be credited,
card (B) to be credited receives this voucher (F(M,b,N)), and deducts from it amount (M), identity (b) and number (N),
card (B) to be credited verifies if calculated amount (M) is indeed the requested amount (M), if the calculated identity (b) is indeed its own and if the calculated number (N) is indeed number (N) that it had selected,
in the affirmative, card (B) to be credited changes number (N) for the next exchange and exchanges its balance of amount (M) in question, this process characterized by using the function (F) to calculate voucher (C), as defined and used by the following operations:
defining in advance multiple ciphering keys (K1, K2, .... Km, ..., Kn, ...),
storing in card (B) to be credited one of these multiple keys, where key number n is a function (u) of identity (b) of card (B), (u(b)=n),
storing in card (A) to be debited certain varied keys (Ka1, Ka2, ..., Kan, ...) which are each a function of multiple keys (K1, K2, ...) and of identity (a) of card (A) to be debited, these varied keys being loaded in card (A) during its customization,
having card (A) to be debited receive identity (b) of card (B) to be credited and calculate row (n) of the varied key by function (b) and deduct from it that of varied keys (Kan) with which it is to calculate voucher (C),
having card (B) to be credited calculate varied key (Kan) which was used in the calculation of the voucher that it received and this with its own key (Kn) and with identity (a) corresponding to card (A) to be debited, card (B) to be credited then being able to decipher voucher C with this varied key (Kan).

2. Process according to claim 1, wherein each card (A) or (B) is to be either debited or credited:
storing in card (A) one of the multiple keys where key number (m) is a function (u) of the identity of the card (u(a)=m), storing in card (B) varied keys (Kb1, Kb2, .... Kbm,) making it possible for card (B) to calculate a voucher intended in particular for a card (A) of identity (m) with varied key (Kbm), card (A) receiving such a voucher reconstituting this key with its key (Km) and its identity (b).
